# EUROPEAN PATENT APPLICATION

(11) **EP 1 365 269 A2**
(43) Date of publication of application: **26.11.2003**
(21) Application number: 03253138.6
(22) Date of filing: 20.05.2003
(51) Int. Cl.: G02B 6/50

(54) **Optical cable repair method and repair cable piece used therefore**

(30) Priority: 20.05.2002 JP 2002143927
(71) Applicant: NEC Corporation, Minato-ku, Tokyo 108-8001 (JP)
(72) Inventor: Sukuyama, Hiroshi, c/o NEC Corporation, Tokyo 108-8001 (JP)
(74) Representative: Abnett, Richard Charles

(57) **Abstract**

In a method of repairing at least one optical cable, in one repeating span between two adjacent repeaters (111,112), which is constituted by a first optical fiber (113a) exhibiting positive wavelength dispersion with respect to an optical signal to be transmitted and a second optical fiber (113b) which is connected in series with the first optical fiber and exhibits negative wavelength dispersion with respect to the optical signal, an optical cable portion, in the repeating span, which includes a fault point (115) of at least an optical cable in one direction and has a fixed length from a point near one of two adjacent repeaters is cut. At least one repair cable piece (121a,121b) constituted by a third optical fiber (121a) exhibiting the same positive wavelength dispersion as that of the first optical fiber (113a) and a fourth optical fiber (121b) which is connected in series with the third optical fiber and exhibits the same negative wavelength dispersion as that of the second optical fiber (113b) is inserted and connected in the cut optical cable portion. The repair cable piece has a fixed length equal to the sum of the length of the cut optical cable and the additional cable length for a repair. A repair cable piece is also disclosed.

## Description

### Background of the Invention

The present invention relates to an optical cable repair method and a repair cable piece used therefor and, more particularly, to a repair method for an optical cable which is laid underwater for wavelength division multiplexing long-distance optical communication and a repair cable piece used therefor.

A wavelength division multiplexing optical communication scheme is conventionally known, in which in order to realize large-capacity, long-distance optical communication, optical signals having different wavelengths are multiplexed and transmitted through one optical cable, and repeaters are arranged at predetermined distances to amplify wavelength division multiplexed signals transmitted through the optical cable. This wavelength division multiplexing optical communication scheme uses a dispersion management fiber (DMF) as an optical cable. The dispersion management fiber suppresses cumulative dispersion at each wavelength in 10-Gbps class high-speed wavelength division multiplexing long-distance optical communication.

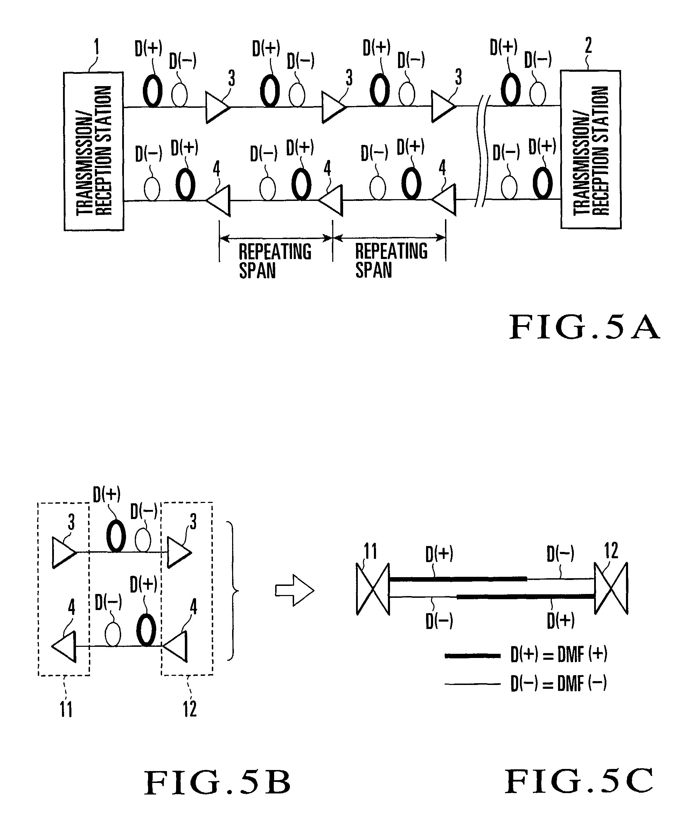

This DMF is constituted by a positive dispersion optical fiber (DMF(+)) exhibiting positive wavelength dispersion with respect to an optical signal to be transmitted and a negative dispersion optical fiber (DMF(-)) exhibiting negative wavelength dispersion with respect to the optical signal. The DMF also uses an optical fiber formed from a combination of a positive dispersion optical fiber (DMF(+)) and a negative dispersion optical fiber (DMF(-)) in each repeating interval. This DMF is used as an optical cable laid underwater. Fig. 5A shows the schematic arrangement of a submarine cable system for 10-Gbps class wavelength division multiplexing optical communication.

Referring to Fig. 5A, in an upstream optical cable for transmitting a wavelength division multiplexed signal from a transmission/reception station 1 to a transmission/reception station 2, upstream optical amplifiers 3 are arranged at predetermined distances, and a DMF D(+) having a positive dispersion characteristic and a DMF D(-) having a negative dispersion characteristic are sequentially connected between the adjacent optical amplifiers 3. Likewise, in a downstream optical cable for transmitting a wavelength division multiplexed signal from the transmission/reception station 2 to the transmission/reception station 1, downstream optical amplifiers 4 are arranged at predetermined distances, and a DMF D(+) having a positive dispersion characteristic and a DMF D(-) having a negative dispersion characteristic are sequentially connected between the adjacent optical amplifiers 4.

As shown in Fig. 5B, the upstream optical amplifier 3 and downstream optical amplifier 4 disposed at the same position are formed from one submarine repeater 11 or 12. The above predetermined distance between the adjacent submarine repeaters 11 and 12 is called a repeating span.

In the following description, a DMF D(+) (to be also referred to as a DMF(+) hereinafter) having a positive dispersion characteristic is indicated by a thick line, and a DMF D(-) (to be also referred to as a DMF(-) hereinafter) having a negative dispersion characteristic is indicated by a thin line, as shown in Fig. 5C.

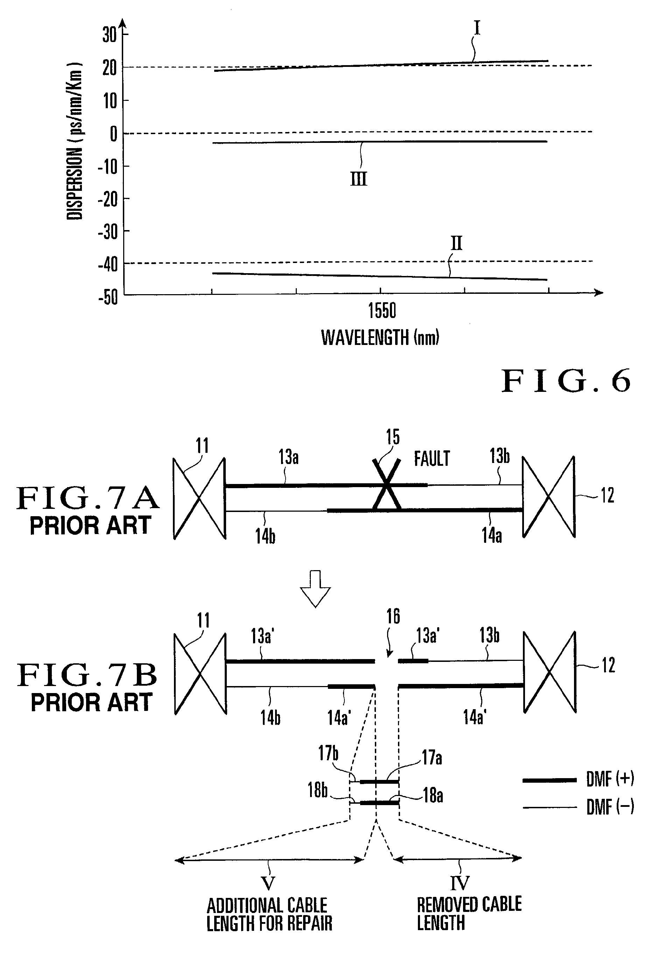

The above DMF(+) exhibits a positive dispersion characteristic with a dispersion value of about +20 ps/nm/km as indicated by "I" in Fig. 6. The above DMF(-) exhibits a negative dispersion characteristic with a dispersion value of about -40 ps/nm/km as indicated by "II" in Fig. 6. For this reason, in one repeating span in the above submarine optical cable system, the length of the DMF(+) is set to be twice that of the DMF(-), i.e., DMF(+) : DMF(-) = 2 : 1.

With this setting, an optical fiber in one repeating span exhibits an overall characteristic as indicated by "III" in Fig. 6. That is, the positive and negative dispersion characteristics cancel out each other to result in a dispersion value of 0.

In such a submarine optical cable system, a fault developed in a submarine optical cable is repaired by the method shown in Figs. 7A and 7B in the prior art. Figs. 7A and 7B show one repeating interval (one repeating span) in the submarine optical cable system. In this repeating span, the two adjacent submarine repeaters 11 and 12 are connected to each other through a pair of optical cables formed from upstream and downstream DMFs, as described above.

As shown in Fig. 7A, the upstream DMF is designed such that a positive dispersion optical fiber (DMF(+)) 13a and a negative dispersion optical fiber (DMF(-)) 13b are connected to each other in each repeating span with a length ratio of 2 : 1. Likewise, the downstream DMF is designed such that a positive dispersion optical fiber (DMF(+)) 14a and a negative dispersion optical fiber (DMF(-)) 14b are connected to each other in each repeating span with a length ratio of 2 : 1.

Assume that a fault has occurred at a point 15 of the DMF(+) 13a adjacent to the DMF(+) 14a, as shown in Fig. 7A. According to the prior art, as denoted by reference numeral 16 in Fig. 7B, both the DMF(+) 13a and the adjacent DMF(+) 14a are cut by a predetermined length centered on the fault occurrence point 15, and repair cables are connected in the cut sections 16 of remaining DMF(+) 13a' and DMF(+) 14a'.

As shown in Fig. 7B, the above repair cable, which is constituted by a DMF(+) 17a and DMF(-) 17b, is connected in the cut section 16 of the DMF(+) 13a'. In addition, as shown in Fig. 7B, the above repair cable, which is constituted by a DMF(+) 18a and DMF(-) 18b, is connected in the cut section 16 of the DMF(+) 14a'.

Although portions of the DMF(+) 14a and DMF(+) 13a are cut in this case, the cables newly connected in the cut sections 16 include DMFs(-) as well as DMFs(+). This is because, as shown in Fig. 7B, a repair on a submarine optical cable requires a final bight length (additional cable length) V for the final splice (i.e., connection) to be made on a cable-laying/repair ship in addition to an eliminated (cut) cable length IV.

In addition, the length ratio of a DMF(+) to a DMF(-) in one repeating span is set as DMF(+) : DMF(-) = 2 : 1, as described above. The transmission characteristics deteriorate unless this ratio is always maintained. Note that the above final bight length V depends on the depth of water at which a submarine optical cable is laid, and is generally about 2.5 times the depth of water.

In order to cancel out the dispersion amount of the additional cable length (final bight length) V required for the above repair, the lengths of the DMFs(+) 17a and 18a and DMFs(-) 17b and 18b used for repair cables are calculated from the dispersion value data of a laid optical cable and spare cable used in a repair section so as to maintain the relationship of DMF(+) : DMF(-) = 2 : 1 in one repeating span as a whole.

Furthermore, it is very difficult to form special repair cables set to these calculated lengths on a cable-laying/repair ship.

Another repair method is known, in which as an optical fiber to be inserted to repair a transmission line formed by connecting a first optical fiber having positive wavelength dispersion with respect to the wavelength of light to be transmitted to a second optical fiber having negative wavelength dispersion, a third optical fiber is used, which has a wavelength dispersion smaller in absolute value than the wavelength dispersion of each of the first and second optical fibers per unit length (Japanese Patent Laid-Open No. 2001-228336).

According to this known repair method, when, for example, a non-zero dispersion-shifted fiber (NZ-DSF) whose dispersion value is near 0 is used as the third optical fiber, the cumulative dispersion amount changes little. This reduces the influence of the change on the transmission characteristics.

In this known repair method, however, since the dispersion value of the third optical fiber is not 0, a change in cumulative dispersion amount after a repair cannot be satisfactorily suppressed. In addition, since the length of the third optical fiber depends on the depth of water at which a submarine optical cable is laid, the above change in cumulative dispersion amount after a repair at a great depth of water, in particular, cannot be neglected.

### Summary of the Invention

According to the present invention, there is provided a method of repairing at least one optical cable, in one repeating span between two adjacent repeaters, which is constituted by a first optical fiber exhibiting positive wavelength dispersion with respect to an optical signal to be transmitted and a second optical fiber which is connected in series with the first optical fiber and exhibits negative wavelength dispersion with respect to the optical signal, comprising the steps of cutting an optical cable portion, in the repeating span, which includes a fault point of at least an optical cable in one direction and has a fixed length from a point near one of two adjacent repeaters, and inserting and connecting, in the cut optical cable portion, at least one repair cable piece constituted by third optical fiber exhibiting the same positive wavelength dispersion as that of the first optical fiber and a fourth optical fiber which is connected in series with the third optical fiber and exhibits the same negative wavelength dispersion as that of the second optical fiber, the repair cable piece having a fixed length equal to a sum of a length of the cut optical cable and an additional cable length for a repair.

The present invention also provides at least one repair cable piece for a submarine optical cable laid underwater, which is inserted and connected in a cut section formed by cutting a submarine optical cable portion including a fault point of at least a submarine optical cable in one direction in one repeating span and having a predetermined length from a point near one of two adjacent repeaters, the submarine optical cable per repeating span between the two adjacent repeaters having a first optical fiber exhibiting positive wavelength dispersion with respect to an optical signal to be transmitted and a second optical fiber exhibiting negative wavelength dispersion with respect to the optical signal, which are connected to each other, characterized by comprising a third optical fiber which exhibits the same positive wavelength dispersion as that of the first optical fiber, a fourth optical fiber which is connected in series with said third optical fiber and exhibits the same negative wavelength dispersion as that of the second optical fiber, and an additional cable which connects said third optical fiber to said fourth optical fiber in making a repair, wherein said repair cable piece has a fixed length equal to a sum of a length of the cut submarine optical cable and an additional cable length of said additional cable.

### Brief Description of the Drawings

The invention will now be described in more detail by way of example with reference to the drawings, in which:
Figs. 1A to 1D are views for explaining an optical cable repair method and a repair cable piece used for the method according to the first embodiment of the present invention;
Figs. 2A to 2D are views for explaining an optical cable repair method and a repair cable piece used for the method according to the second embodiment of the present invention;
Figs. 3A to 3D are views for explaining an optical cable repair method and a repair cable piece used for the method according to the third embodiment of the present invention;
Figs. 4A to 4D are views for explaining an optical cable repair method and a repair cable piece used for the method according to the fourth embodiment of the present invention;
Figs. 5A and B are view for explaining the arrangement of an example of a submarine optical cable system to which the present invention is applied and the arrangement of one repeating span;
Fig. 6 is a graph showing the characteristics of a DMF in one repeating span; and
Figs. 7A and 7B are views for explaining an example of a conventional method.

### Description of the Preferred Embodiments

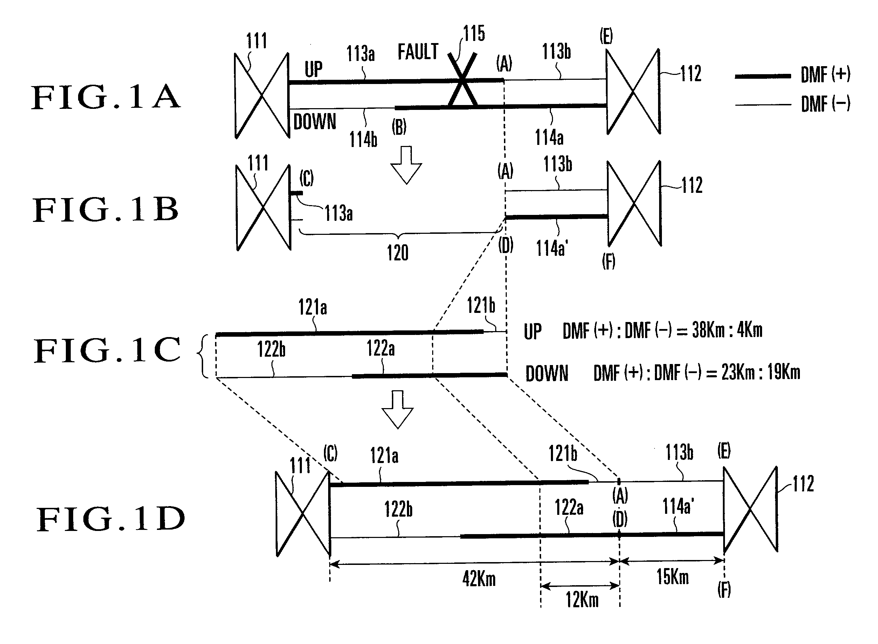

The first embodiment of the present invention will be described next with reference to the accompanying drawings. Figs. 1A, 1B, and 1D show one repeating interval (one repeating span) in a submarine optical cable system. In this repeating span, a pair of optical cables constituted by upstream and downstream DMFs is connected between two adjacent submarine repeaters 111 and 112. Fig. 1C shows the schematic arrangement of a repair cable piece according to the first embodiment of the present invention.

Referring to Fig. 1A, the upstream DMF indicated by "UP" is constituted by a combination of a positive dispersion optical fiber (DMF(+)) 113a and negative dispersion optical fiber (DMF(-)) 113b, and the connection point between them is indicated by "(A)".

The downstream DMF indicated by "DOWN" is constituted by a combination of a positive dispersion optical fiber (DMF(+)) 114a and negative dispersion optical fiber (DMF(-)) 114b, and the connection point between them is indicated by "(B)".

As described above, the length ratio of a DMF(+) to a DMF(-) in one repeating span is set as DMF(+) : DMF(-) = 2 : 1. If, therefore, the length of one repeating span is 45 km, each of the DMFs(+) 113a and 114a has a length of 30 km, and each of the DMFs(-) 113b and 114b has a length of 15 km.

The wavelength division multiplexed signals amplified by the submarine repeaters 111 and 112 are input first to the DMFs(+) 113a and 114a and then input to the submarine repeaters 112 and 111 through the DMFs(-) 113b and 114b. This is because, since the diameter (mode field diameter) of each of the DMFs(+) 113a and 114a is larger than that of each of the DMFs(-) 113b and 114b, the losses in the wavelength division multiplexed signals output from the submarine repeaters 111 and 112 are smaller when they are input first to the large-diameter DMFs(+) 113a and 114a than when they are input first to the small-diameter DMFs(-) 113b and 114b.

In this embodiment, the DMF repair cable piece (mini block) shown in Fig. 1C is prepared in advance to repair a submarine optical cable fault developed at any depth of water by using (providing) the mini block.

This mini block has a fixed length incorporating the final bight length of the DMF(+) and DMF(-) in expectation of an increase in the length of the repeating span length upon a repair.

In this embodiment, the length of one repeating span is set to 45 km, as described above, and the maximum depth of water at which a submarine optical cable to be repaired exists is about 4,800 m. In this embodiment, therefore, the surplus length (final bight length) required for a repair is 12 km (= 4800 m x 2.5).

In addition, as shown in Fig. 1C, in a repair cable piece (mini block) in this embodiment, the upstream optical cable of the mini block is formed by connecting a DMF(+) 121a having a length of 38 km to a DMF(-) 121b having a length of 4 km. As shown in Fig. 1C, the downstream optical cable of the mini block is formed by connecting a DMF(+) 122a having a length of 23 km to a DMF(-) 122b having a length of 19 km.

As will be described later, the lengths of the DMFs(+) 121a and 122a and DMFs(-) 121b and 122b are set such that the ratio of the first sum of the length of the remaining DMF(+) of the laid submarine optical cable that has been cut for the repair and the length of each DMF(+) of the mini block to the second sum of the length of the remaining DMF(-) of the laid submarine optical cable that has been cut for the repair and the length of each DMF(-) of the mini block becomes 2 : 1.

In the repair cable piece (mini block) in this embodiment shown in Fig. 1C, the DMFs on the upstream side in optical signal transmission are the DMFs(+) 121a and 122a which are positive dispersion optical fibers, and the DMFs on the downstream side in optical signal transmission are the DMFs(-) 121b and 122b which are negative dispersion optical fibers. These optical fibers are connected to each other in the order named. This is because DMFs having the same dispersion characteristics and the same diameters as those of the DMFs of the laid submarine optical cable which are to be connected in a repair (to be described later) are connected to each other.

As described above, the repair cable piece (mini block) shown in Fig. 1C is constituted by a pair of upstream and downstream DMFs and has a section where the identical positive dispersion optical fibers DMFs(+), i.e., the DMFs(+) 121a and 122a, are adjacent to each other at the middle portions of these optical cables. In addition, in the sections on the two sides of the middle portions of the optical cables, the DMFs having different dispersion characteristics, i.e., the DMF(+) 121a and DMF(-) 122b, and the DMF(-) 121b and the DMF(+) 122a, are adjacent to each other. The repair cable piece (mini block) shown in Fig. 1C has a fixed length of 42 km.

Assume that a fault has occurred at a point 115 of the DMF(+) 113a, as shown in Fig. 1A. In this embodiment, as denoted by reference numeral 120 in Fig. 1B, first of all, a cable-laying/repair ship cuts an upstream optical cable portion having a length of 30 km, which extends from a point near a connection point (C) between the DMF(+) 113a and the submarine repeater 111 to a connection point (A) between the DMF(+) 113a and the DMF(-) 113b, and a downstream optical cable portion having a length of 30 km, which is constituted by the entire DMF(-) 114b corresponding to this upstream optical cable and part of the DMF(+) 114a.

After this cutting operation, the remaining downstream optical cable portion is a DMF(+) 114a' extending from a cutting point (D) (a position corresponding to the connection point (A)) to a connection point (F) of the submarine repeater 112, and the DMF(-) 113b is left intact as an upstream optical cable portion. That is, the optical cable portions 113b and 114a' each having a length of 15 km from the submarine repeater 112 are left.

The mini block shown in Fig. 1C described above is then inserted in the cut portion 120 to connect the cut optical cable portions. In this case, the cable length of the mini block is equal to the length obtained by adding the surplus length of a DMF, which is required for the repair, to the DMF length in the cut section. When the mini block is connected to the DMFs in the non-cut section, the relationship of DMF(+) : DMF(-) = 2 : 1 is satisfied.

More specifically, with regard to the upstream optical cable, the upstream DMF of the mini block which is constituted by the DMF(+) 121a and DMF(-) 121b shown in Fig. 1C is connected in the 30-km long cut section 120 between the points (A) and (C). With this operation, as shown in Fig. 1D, the length of the DMF(+) becomes 38 km, and the length of the DMF(-) becomes 19 km (= DMF(-) 121b + DMF(-) 113b = 4 km + 15 km). Therefore, this satisfies the above relationship of DMF(+) : DMF(-) = 2 : 1.

Likewise, with regard to the downstream optical cable, the downstream DMF of the mini block which is constituted by the DMF(+) 122a and DMF(-) 122b shown in Fig. 1C is connected in the 30-km long cut section 120. With this operation, as shown in Fig. 1D, the length of the DMF(+) becomes 38 km (= DMF(+) 114a' + DMF(+) 122a = 15 km + 23 km), and the length of the DMF(-) 122b becomes 19 km. Therefore, this satisfies the above relationship of DMF(+) : DMF(-) = 2 : 1.

As described above, according to this embodiment, a pair of optical cables are simultaneously cut by a cable length of 2/3 the length of one repeating span, i.e., the portion which extends from the point (C) near the repeater to the connection point (A) between the DMF(+) and the DMF(-) and includes the fault point 115 in one repeating span, and the mini block shown in Fig. 1C is inserted in this cut section to be connected to the remaining optical cable portions. With this easy, simple operation, a repair for optical cable connection can be made so as to satisfy the above relationship of DMF(+) : DMF(-) = 2 : 1. This makes it possible to eliminates the necessity to combine DMFs(+) and DMFs(-) in a complicated manner and connect them on the cable-laying/repair ship as in the prior art without causing any deterioration in transmission characteristics.

In addition, according to this embodiment, the surplus length of the mini block is 12 km. Therefore, submarine optical cables laid at all depths of water equal to or less than about 4,800 m can be repaired by using a mini block having the same arrangement as that shown in Fig. 1C. Note that even if a fault occurs at a point of the DMF(+) 114a adjacent to the DMF(+) 113a, a repair can be made in the same manner as described above.

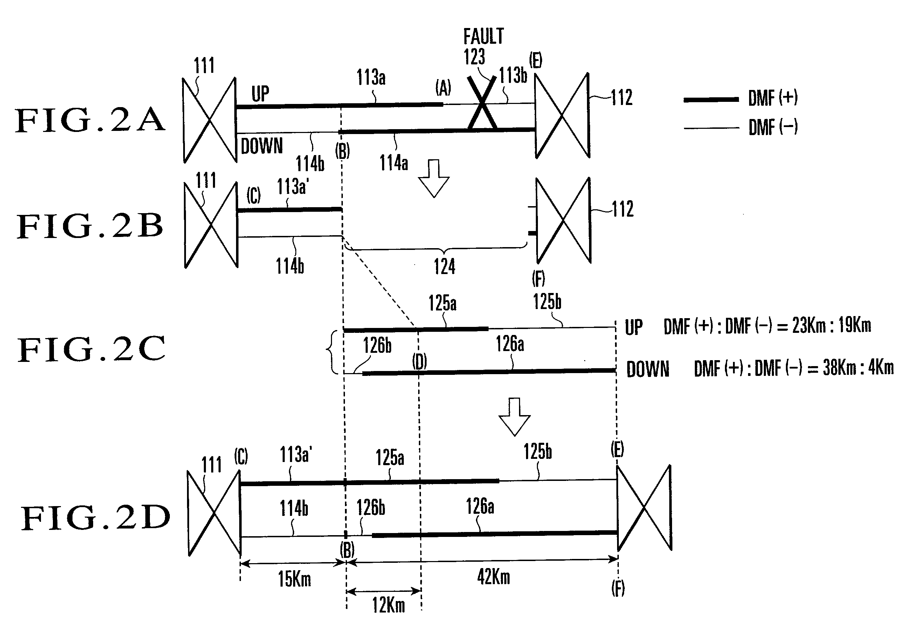

The second embodiment of the present invention will be described next with reference to Figs. 2A to 2D. The same reference numerals as in Figs. 1A to 1D denote the same parts in Figs. 2A to 2D, and a description thereof will be omitted. Figs. 2A, 2B, and 2D show one repeating interval (one repeating span) in a submarine optical cable system.

In this embodiment, as in the first embodiment, a DMF repair cable piece (mini block) is prepared in advance to repair a fault occurring in a submarine optical cable laid at a depth of water equal to or less than a predetermined maximum depth of water. In this embodiment, a mini block having the arrangement shown in Fig. 2C is used.

The repair cable piece (mini block) in this embodiment has a surplus length of 12 km, which is required for a repair, when the length of one repeating span is 45 km. As shown in Fig. 2C, the upstream DMF of the mini block is formed by connecting a DMF(+) 125a having a length of 23 km to a DMF(-) 125b having a length of 19 km. In addition, as shown in Fig. 2C, the upstream DMF of the mini block is formed by connecting a DMF(+) 126a having a length of 38 km to a DMF(-) 126b having a length of 4 km.

Similar to the mini block shown in Fig. 1C, the repair cable piece (mini block) in this embodiment shown in Fig. 2C is constituted by a pair of upstream and downstream DMFs. This mini block also has a section where the identical positive dispersion optical fibers DMFs(+), i.e., the DMFs(+) 125a and 126a, are adjacent to each other at the middle portions of these optical cables. In addition, in the sections on the two sides of the middle portions of the optical cables, the DMFs having different dispersion characteristics, i.e., the DMF(+) 125a and DMF(-) 126b, and the DMF(-) 125b and the DMF(+) 126a, are adjacent to each other.

Assume that a fault has occurred at a point 123 of the DMF(-) 113b, as shown in Fig. 2A. In this embodiment, as denoted by reference numeral 124 in Fig. 2B, first of all, a cable-laying/repair ship cuts an upstream optical cable portion having a length of 30 km, which is constituted by a DMF portion extending from a position near a connection point (E) between a DMF(-) 113b and a submarine repeater 112 and a portion of a DMF(+) 113a, and a corresponding downstream optical cable portion having a length of 30 km (i.e., the entire DMF(+) 114a having a length of 30 km which extends from a position near a connection point (F) between the DMF(+) 114a and the submarine repeater 112 to a connection point (B) between the DMF(+) 114a and a DMF(-) 114b).

After this cutting operation, the remaining upstream optical cable portion is a DMF(+) 113a' extending from a cutting point (a position corresponding to the connection point (B)) to a connection point (C) of a submarine repeater 111, and the DMF(-) 114b is left intact as a downstream optical cable portion. That is, the optical cable portions 113a' and 114b each having a length of 15 km from the submarine repeater 111 are left.

The mini block shown in Fig. 2C described above is then inserted in the cut portion 124 to connect the cut optical cable portions. In this case, the cable length of the mini block is equal to the length obtained by adding the surplus length of a DMF, which is required for the repair, to the DMF length in the cut section. When the mini block is connected to the DMFs in the non-cut section, DMF(+) : DMF(-) = 2 : 1 is satisfied.

More specifically, with regard to the upstream optical cable, the upstream DMF of the mini block which is constituted by the DMF(+) 125a and DMF(-) 125b shown in Fig. 2C is connected in the 30-km long cut section 124. With this operation, as shown in Fig. 2D, the length of the DMF(+) becomes 38 km (= DMF(+) 113a' + DMF(+) 125a = 15 km + 23 km), and the length of the DMF(-) becomes 19 km equal to the length of the DMF(-) 125b. Therefore, this satisfies the above relationship of DMF(+) : DMF(-) = 2 : 1.

Likewise, with regard to the downstream optical cable, the downstream DMF of the mini block which is constituted by the DMF(+) 126a and DMF(-) 126b shown in Fig. 2C is connected in the 30-km long cut section 124.

With this operation, as shown in Fig. 2D, the length of the DMF(+) becomes 38 km equal to the length of DMF(+) 126a, and the length of the DMF(-) becomes 19 km (= DMF(-) 114b + DMF(-) 126b = 15 km + 4 km). Therefore, this satisfies the above relationship of DMF(+) : DMF(-) = 2 : 1.

As described above, according to this embodiment, as in the first embodiment, a pair of optical cables are simultaneously cut by a cable length of 2/3 the length of one repeating span, i.e., the portion which extends from the point (E) near the repeater to the connection point (B) between the DMF(+) and the DMF(-) and includes the fault point 123 in one repeating span, and the mini block shown in Fig. 2C is inserted in this cut section to be connected to the remaining optical cable portions.

With this easy, simple operation, a repair for optical cable connection can be made so as to satisfy the above relationship of DMF(+) : DMF(-) = 2 : 1. This makes it possible to eliminates the necessity to combine DMFs(+) and DMFs(-) in a complicated manner and connect them on the cable-laying/repair ship as in the prior art without causing any deterioration in transmission characteristics.

In addition, according to this embodiment, the surplus length of the mini block is 12 km. Therefore, submarine optical cables laid at all depths of water equal to or less than about 4,800 m can be repaired by using a mini block having the same arrangement as that shown in Fig. 1C. Note that even if a fault occurs at a point of the DMF(+) 114a adjacent to the DMF(-) 113b, a repair can be made in the same manner as described above.

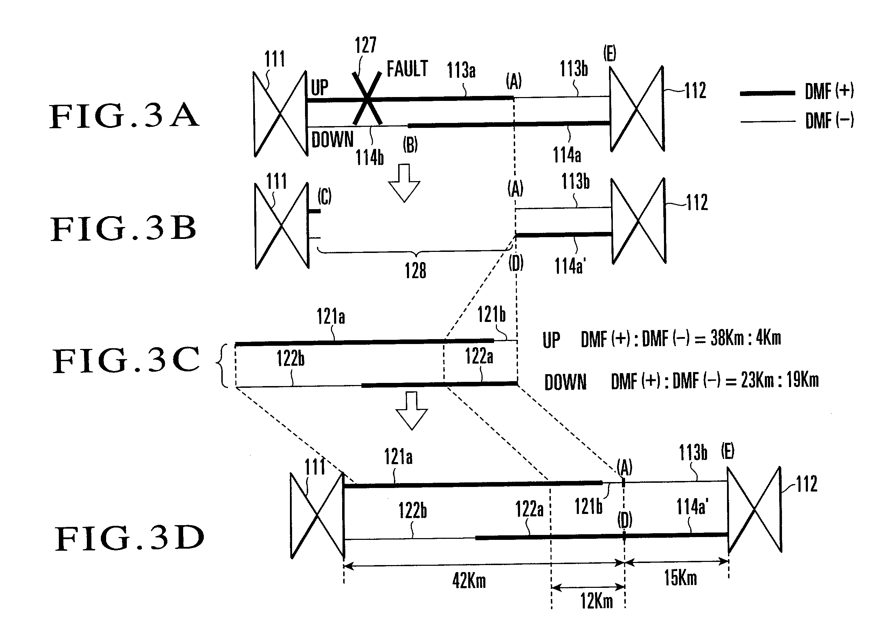

The third embodiment will be described next with reference to Figs. 3A to 3D. The description made with reference to Figs. 1A to 1D is based on the assumption that the fault has occurred at the point 115 of the DMF(+) 113a adjacent to the DMF(+) 114a. This embodiment is associated with a repair method in a case wherein a fault has occurred in a DMF(+) 113a adjacent to a DMF(-) 114b, as denoted by reference numeral 127 in Fig. 3A. The same reference numerals as in Figs. 1A to 1D denote the same parts in Figs. 3A to 3D, and a description thereof will be omitted.

In this case, as indicated by reference numeral 128 in Fig. 3B, a cable-laying/repair ship cuts a 30-km long upstream optical cable portion formed from the DMF(+) 113a and a 30-km long downstream optical cable portion constituted by a corresponding portion of a DMF(+) 114a and the entire DMF(-) 114b. The mini block shown in Fig. 3C is then inserted in the cut section to connect the cut optical cable portions. With the above cutting operation, the remaining downstream optical cable portion is a DMF(+) 114a' extending from the cutting point to a connection point with a submarine repeater 112.

The mini block shown in Fig. 3C is identical to that shown in Fig. 1C. A cut section 128 of the optical cable portion shown in Fig. 3B is also identical to the cut section 120 of the optical cable portion in the first embodiment.

When, therefore, a fault occurs at the point 127 of the DMF(+) 113a shown in Fig. 3A, as in the same manner in the first embodiment, an upstream optical cable portion having a cable length of 2/3 the length of one repeating span and extending from a point (C) near the connection point between a submarine repeater 111 and the DMF(+) 113a including the fault point 127 in one repeating span to a connection point (A) between the DMF(+) 113a and a DMF(-) 113b is cut, together with a corresponding downstream optical cable portion. The mini block shown in Fig. 3C is then inserted in the cut section 128 and connected to the remaining optical cable portions. With this easy, simple operation, a repair for optical cable connection can be made so as to satisfy the above relationship of DMF(+) : DMF(-) = 2 : 1. This makes it possible to eliminates the necessity to combine DMFs(+) and DMFs(-) in a complicated manner and connect them on the cable-laying/repair ship as in the prior art. Note that the same applies to a case wherein a fault is developed in the DMF(-) 114b.

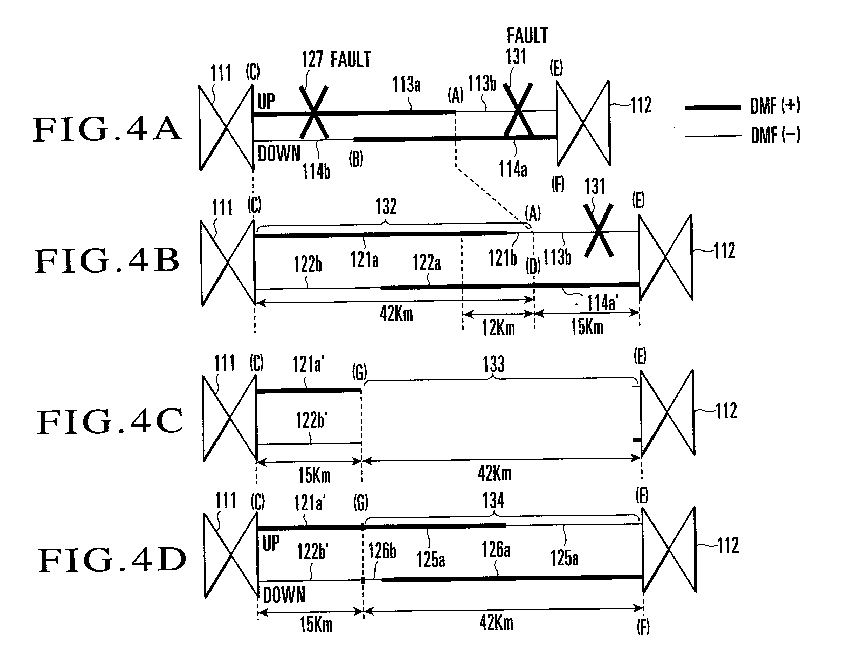

The fourth embodiment will be described next with reference to Figs. 4A to 4D. The first to third embodiments each have exemplified the repair method for a case wherein a fault has occurred at one point of an optical cable in one repeating span. This embodiment will exemplify the case wherein faults occur at two or more points. The same reference numerals as in Figs. 1A to 3D denote the same parts in Figs. 4A to 4D, and a description thereof will be omitted.

Assume that faults have occurred at two points, i.e., a point 127 of a DMF(+) 113a adjacent to a DMF(-) 114b and a point 131 of a DMF(-) 113b, as shown in Fig. 4A.

In this embodiment, for example, in order to repair first the fault point 127, a cable-laying/repair ship simultaneously cuts an upstream optical cable portion having a cable length of 2/3 the length of one repeating span and extending from a point (C) near the connection point between a submarine repeater 111 and the DMF(+) 113a including the fault point 127 in one repeating span, together with a corresponding downstream optical cable section in the same manner as in the repair method described with reference to Figs. 3A to 3D. The 42-km long mini block shown in Figs. 1C and 3C is then inserted in the cut section and connected to the remaining optical cable portions. As a result, these cable portions are connected in the state shown in Fig. 4B.

Referring to Fig. 4B, a pair of 42-km long optical cables 132 constituted by an upstream DMF formed from a DMF(+) 121a and DMF(-) 121b and a downstream DMF formed from a DMF(+) 122a and DMF(-) 122b correspond to the mini block shown in Figs. 1C and 3C. With this operation, the fault point 127 shown in Fig. 4A is repaired.

Subsequently, as indicated by reference numeral 133 in Fig. 4C, optical cable portions other than the pair of optical cables each having a length of 1/3 the length of one repeating span, i.e., 45 km, of the original submarine optical cable and extending from the submarine repeater 111 to a 15-km point (G) are simultaneously cut. That is, a pair of 42-km long optical cable portions extending to a submarine repeater 112 and including the fault point 131 are simultaneously cut. With this cutting operation, a 15-km long fiber portion DMF(+) 121a', of the 38-km long DMF(+) 121a, which extends from the submarine repeater 111 is left, and a 15-km long fiber portion DMF(+) 122b', of the 19-km long DMF(-) 122b, which extends from the submarine repeater 111 is left.

A mini block 134 shown in Fig. 2C is inserted in this cut section 133 to connect the remaining optical cable portions 121a' and 122b' to the submarine repeater 112. As a result, they are connected in the state shown in Fig. 4D. As shown in Fig. 4D, in the upstream optical cable, the length of the DMF(+) is 38 km (= DMF(+) 121a' + DMF(+) 125a = 15 km + 23 km), and the length of the DMF(-) is equal to the length of the DMF(-) 125b, i.e., 19 km, thereby satisfying the above relationship of DMF(+) : DMF(-) = 2 : 1.

Likewise, in the downstream optical cable, the length of the DMF(+) is equal to the length of the DMF(+) 126a, i.e., 38 km, and the length of the DMF(-) is 19 km (= DMF(-) 122b' + DMF(-) 126b = 15 km + 4 km), thereby satisfying the above relationship of DMF(+) : DMF(-) = 2 : 1.

Even if faults occur at two points, in the same manner as in each embodiment described above, a repair for optical cable connection which satisfies the above relationship of DMF(+) : DMF(-) = 2 : 1 can be made very easily by repeating twice the simple, easy operation of simultaneously cutting a pair of optical cable portions in a predetermined section and inserting the mini block shown in Fig. 1C or 2C in the cut section to be connected to the remaining optical cable portions.

This makes it possible to eliminate the necessity to combine DMFs(+) and DMFs(-) in a complicated manner and connect them as in the prior art without causing any deterioration in transmission characteristics.

Referring to Fig. 4A, even when one or both of the fault occurrence points 127 and 131 are located at the corresponding points of the adjacent downstream optical cable, a repair can be made in the same manner as described above. More specifically, if a fault point exists on one of the upstream and downstream optical cables, the fault can be repaired by the simple operation of simultaneously cutting fixed-length optical cable portions of both the upstream and downstream optical cables which include the fault point, and inserting and connecting a fixed-length repair cable piece in the cut portions.

In a cable repair, a fixed-length optical cable portion having a length of n/(n + m) the optical cable length of one repeating span including a fault point is cut, and a fixed-length repair cable piece is inserted and connected in the cut portion. With this simple operation, a repair can be made while the ratio of the total length of fibers exhibiting positive wavelength dispersion to that of fibers exhibiting negative wavelength dispersion in one repeating span is kept to a predetermined value after the repair.

This eliminates the necessity to calculate the length ratio between two kinds of fibers and combine the two kinds of repair fibers on the basis of the calculation in order to keep the ratio of the total length of fibers exhibiting positive wavelength dispersion to that of fibers exhibiting negative wavelength dispersion in one repeating span to a predetermined ratio after a repair.

When a repair is to be made to a fault point of an optical cable constituted by upstream and downstream optical cables for bidirectional optical communication, optical cable portions of the pair of optical cables, each of which has a fixed length, i.e., a length of n/(n + m) the optical cable length of one repeating span including the fault point, are simultaneously cut, and a fixed-length repair cable piece is inserted and connected in the cut portions. With this simple operation, a repair can be made while the ratio of the total length of fibers exhibiting positive wavelength dispersion to that of fibers exhibiting negative wavelength dispersion in one repeating span is kept to a predetermined value after the repair.

A repair cable piece has a fixed length equal to the sum of the length of a submarine optical cable portion cut for a repair in one repeating span and the additional cable length of an additional cable for the repair, and is formed by connecting the third optical fiber exhibiting the same positive wavelength dispersion as that of the first optical fiber to the fourth optical cable exhibiting the same negative wavelength dispersion as that of the second optical fiber. This repair cable piece is inserted and connected in the cut optical portion. This simple operation enables a repair without calculating the ratio of the length of the first optical fiber to that of the second optical fiber in accordance with the depth of water.

In addition, after a repair, the dispersion value of optical fibers in one repeating span can always be kept to almost 0.

When a repair is to be made to a fault point of an optical cable constituted by upstream and downstream optical cables so as to perform bidirectional optical communication, this repair cable piece is inserted and connected in the above cut optical cable portion. This simple operation enables a repair without calculating the ratio of the length of the first optical fiber to that of the second optical fiber in accordance with the depth of water.

A repair cable piece has a fixed length equal to the sum of a length of n(n + m) the optical cable length of one repeating span and the additional cable length of an additional cable for a repair. This repair cable piece is inserted and connected in an optical cable portion which includes a fault point in one repeating span and has a length of n/(n + m) the optical cable length of one repeating span from a point near one of two adjacent repeaters to the connection point between the first and second optical fibers. This simple operation enables a repair without calculating the ratio of the length of the first optical fiber to that of the second optical fiber in accordance with the depth of water.

In addition, a submarine optical cable for bidirectional optical communication can be repaired by using a repair cable piece.

Furthermore, faults occurring in submarine optical cables laid at depths of water equal to or less than the maximum depth of water can be eliminated by using identical repair cable pieces regardless of the depths of water.

The present invention is not limited to the above embodiments. For example, the length of one repeating span is not limited to 45 km. In addition, the length ratio of a positive dispersion optical fiber DMF(+) to a negative dispersion optical fiber DMF(-) in one repeating span can be set in accordance with the respective dispersion characteristics of the positive dispersion optical fiber DMF(+) and negative dispersion optical fiber DMF(-).

Each embodiment described above has exemplified the method of repairing submarine optical cables laid at depths of water equal to or less than about 4,800 m by using identical repair cable pieces regardless of the depths of water. However, the range of depths of water at which repairs are to be made may be divided into a plurality of ranges, and repair cable pieces corresponding to the respective divided depth ranges may be prepared to make a repair in the same manner as in the above embodiments. In this case, each cut section can be minimized.

According to the present method, a cable repair is made by the simple operation of cutting fixed-length optical cable portions including a fault and inserting and connecting a fixed-length repair cable piece in the cut portion. With this operation, a repair can be made while the ratio of the total length of fibers exhibiting positive wavelength dispersion to that of fibers exhibiting negative wavelength dispersion in one repeating span is kept to a predetermined value after the repair.

This eliminates the necessity to calculate the length ratio between two kinds of fibers and combine the two kinds of repair fibers on the basis of the calculation in order to keep the ratio of the total length of fibers exhibiting positive wavelength dispersion to that of fibers exhibiting negative wavelength dispersion in one repeating span to a predetermined ratio after a repair. This can also improve the repair efficiency and almost eliminate a change in cumulative dispersion amount after the repair.

When a fault in an optical cable constituted by upstream and downstream optical cables is to be repaired, fixed-length optical cable portions of the pair of optical cables which include the fault point are simultaneously cut, and a fixed-length repair cable piece is inserted and connected in the cut optical cable portions. This simple operation can make a repair, and repair cable pieces can be standardized.

In addition, since a cut section of an optical cable which includes a fault point has a fixed length, and a repair can be made by inserting and connecting a fixed-length repair cable piece in the cut optical cable portion, repair techniques can be standardized.

Furthermore, according to the present method, since each repair cable piece has a fixed length equal to the sum of a length of n/(n + m) the optical cable length of one repeating span and the additional cable length of an additional cable for a repair, the productivity of repair cable pieces can be improved.

Moreover, according to the present method, optical cables laid at depths of water equal to or less than the maximum depth of water can be repaired by using identical repair cable pieces regardless of the depths of water. This greatly facilitates repairs.

## Claims

1. A method of repairing at least one optical cable, in one repeating span between two adjacent repeaters, which is constituted by a first optical fiber exhibiting positive wavelength dispersion with respect to an optical signal to be transmitted and a second optical fiber which is connected in series with the first optical fiber and exhibits negative wavelength dispersion with respect to the optical signal, **characterized by** comprising the steps of:
cutting an optical cable portion, in the repeating span, which includes a fault point of at least an optical cable in one direction and has a fixed length from a point near one of two adjacent repeaters (111, 112); and
inserting and connecting, in the cut optical cable portion, at least one repair cable piece (121a, 121b) constituted by a third optical fiber (121a) exhibiting the same positive wavelength dispersion as that of the first optical fiber (113a) and a fourth optical fiber (121b) which is connected in series with the third optical fiber and exhibits the same negative wavelength dispersion as that of the second optical fiber (113b), the repair cable piece having a fixed length equal to a sum of a length of the cut optical cable and an additional cable length for a repair.

2. A method according to claim 1, wherein
the optical cable comprises a pair of an upstream optical cable (113a, 113b) and a downstream optical cable (114a, 114b),
the cutting step comprises the step of, when a fault point exists on one of an upstream optical cable .and a downstream optical cable in one repeating span, performing processing of cutting an optical cable portion including the fault point and having a predetermined length from a point near one of two adjacent repeaters with respect to both the upstream optical cable and the downstream optical cable, and
the step of inserting and connecting comprises the step of inserting and connecting a pair of repair cable pieces (121a, 121b, 122a, 122b) in a pair of cut optical cable portions in two directions.

3. A method according to claim 1, wherein
the second optical fiber (113b) has a length of m/n a length of the first optical fiber (113a) (n and m are positive real numbers satisfying n > m),
the cutting step comprises the step of cutting an optical cable portion including the fault point of the optical cable in one repeating span and having a length of n/(n + m) an optical cable length of one repeating span from a point near one of two adjacent repeaters,
the step of inserting and connecting comprises the step of inserting and connecting, in the cut optical cable portion, a repair cable piece (121a, 121b) which is constituted by a third optical fiber (121a) and a fourth optical fiber (121b) connected in series with the third optical fiber, and has a fixed length equal to a sum of a length of n/(n + m) an optical cable length of one repeating span and an additional cable length for a repair, and
the third optical fiber (121a) and the fourth optical fiber (121b) are made to have lengths such that a ratio of a first sum of lengths of the first optical fiber (113a) and the third optical fiber (121a) to a second sum of lengths of the second optical fiber (113b) and the fourth optical fiber (121b) after the step of inserting and connecting satisfies n : m.

4. A method according to claim 3, wherein
the optical cable comprises a pair of an upstream optical cable (113a, 113b) and a downstream optical cable (114a, 114b),
the cutting step comprises the step of, when a fault point exists on one of an upstream optical cable and a downstream optical cable in one repeating span, performing processing of cutting an optical cable portion including the fault point and having a length of n/(n + m) a length of an optical cable length of a pair of optical cables in one repeating span from a point near one of two adjacent repeaters with respect to both the upstream optical cable and the downstream optical cable, and
the step of inserting and connecting comprises the step of inserting and connecting a pair of repair cable pieces (121a, 122a, 121b, 122b) in a pair of cut optical cable portions in two directions.

5. A method according to claim 2, wherein
the first optical fiber (113a, 114a) is positioned upstream of optical signal transmission in a repeating span, and
the second optical fiber (113b, 114b) is positioned downstream of optical signal transmission.

6. A method according to claim 1, wherein
the optical cable comprises a dispersion management fiber, and
the second optical fiber (113b) has a length of 1/2 a length of the first optical fiber.

7. A method according to claim 1, wherein
the additional cable length is about 2.5 times a maximum depth of water, and
the step of inserting and connecting comprises the step of inserting and connecting a repair cable piece (121a, 121b) having the same arrangement in a cut optical cable portion of an optical cable laid at a depth of water not more than a maximum depth of water regardless of a depth of water.

8. At least one repair cable piece (121a, 121b) for a submarine optical cable laid underwater, which is inserted and connected in a cut section formed by cutting a submarine optical cable portion including a fault point of at least a submarine optical cable in one direction in one repeating span and having a predetermined length from a point near one of two adjacent repeaters (111, 112), the submarine optical cable per repeating span between the two adjacent repeaters having a first optical fiber exhibiting positive wavelength dispersion with respect to an optical signal to be transmitted and a second optical fiber exhibiting negative wavelength dispersion with respect to the optical signal, which are connected to each other, **characterized by** comprising:
a third optical fiber (121a) which exhibits the same positive wavelength dispersion as that of the first optical fiber (113a);
a fourth optical fiber (121b) which is connected in series with said third optical fiber and exhibits the same negative wavelength dispersion as that of the second optical fiber (113b); and
an additional cable which connects said third optical fiber (121a) to said fourth optical fiber (121b) in making a repair,
wherein said repair cable piece has a fixed length equal to a sum of a length of the cut submarine optical cable and an additional cable length of said additional cable.

9. A cable piece according to claim 8, wherein
said third optical fiber (121a) and said fourth optical fiber (121b) are made to have lengths such that when a positive dispersion value obtained when the first optical fiber (113a) is connected to said third optical fiber (121a) in one repeating span after a repair is combined with a negative dispersion value obtained when the second optical fiber (113b) is connected to said fourth optical fiber (121b) in one repeating span after the repair, the values cancel out each other, and a resultant dispersion value becomes substantially zero.

10. A cable piece according to claim 8, wherein
the submarine optical cable comprises a pair of an upstream optical cable (113a, 113b) and a downstream optical cable (114a, 114b) each having the first optical fiber (113a) and the second optical fiber (113b) which is connected to the first optical fiber (113a) and is different in length from the first optical fiber (113a),
said repair cable piece comprises
an upstream repair cable piece (121a, 121b), and
a downstream repair cable piece (122a, 122b) which is disposed parallel to said upstream repair cable piece (121a, 121b) and has the same length as that thereof, and
said upstream repair cable piece (121a, 121b) and said downstream repair cable piece (122a, 122b) are configured such that said third optical fibers (121a, 122a) are adjacent in a section including middle portions of said repair cable pieces, and said third and fourth optical fibers are adjacent to each other in sections on two sides of the section including the middle portions.

11. A cable piece according to claim 8, wherein
said submarine optical cable comprises a pair of an upstream optical cable (113a, 113b) and a downstream optical cable (114a, 114b) each having the first optical fiber (113a) and the second optical fiber (113b) which is connected to the first optical fiber (113a) and is different in length from the first optical fiber (113a),
said repair cable piece comprises
an upstream repair cable piece (125a, 125b) having said third optical fiber (125a) and said fourth optical fiber (125b) connected to said third optical fiber (125a) at a first connection point, and
a downstream repair cable piece (126a, 126b) which has said third optical fiber (126a) and said fourth optical fiber (126b) connected to said third optical fiber (126b) at a second connection point shifted from the first connecting point in a longitudinal direction of the optical cable and is disposed parallel to said upstream repair cable piece (125a, 125b),
the first and second connection points are connected through an optical fiber identical to one of said third and fourth optical fibers which has a larger length, and
one end of each of said upstream repair cable piece (125a, 125b) and said downstream repair cable piece (126a, 126b) is constituted by said third optical fiber (125a) and said fourth optical fiber (126b), and the other end is constituted by said fourth optical fiber (125b) and said third optical fiber (126a).

12. A cable piece according to claim 8, wherein
the second optical fiber (113b) has a length of m/n (where n and m are positive real numbers that satisfy n < m) a length of the first optical fiber (113a),
said repair cable piece (121a, 121b) has a fixed length equal to a sum of a length of n/(n + m) a submarine optical cable length of one repeating span and an additional cable length for a repair, and is inserted and connected in an optical cable cut section including a fault point of said submarine optical cable in one repeating span and having a length of n/(n + m) an optical cable length from a point near one of two adjacent repeaters, and
said third optical fiber (121a) and said fourth optical fiber (121b) have lengths that make a ratio of a first sum of lengths of the first optical fiber (113a) and said third optical fiber (121a) to a second sum of lengths of the second optical fiber (113b) and said fourth optical fiber (121b) satisfy n : m.

13. A cable piece according to claim 12, wherein
said submarine optical cable comprises a pair of an upstream optical cable (113a, 113b) and a downstream optical cable (114a, 114b) each of which is configured such that the first optical fiber (113a, 114a) and the second optical fiber (113b, 114b) which is different in length therefrom and connected in series with the first optical fiber,
said repair cable piece (121a, 121b, 122b, 122a) comprises a pair of upstream repair cable pieces (121a, 121b) and a pair of downstream repair cable pieces (122a, 122b) each having a fixed length,
said upstream repair cable piece (121a, 121b) and said downstream repair cable piece (122a, 122b) are configured such that said third optical fibers (121a, 122a) are adjacent in a section including middle portions of said repair cable pieces, and said third optical fiber (121a) and said fourth optical fiber (122b) are adjacent to each other in sections on two sides of the section including the middle portions,
said third optical fiber (121a) of said upstream repair cable piece (121a, 121b) is connected to the first optical fiber (113a), and said fourth optical fiber (121b) of said upstream repair cable piece (121a, 121b) is connected to the second optical fiber (113b), and
said third optical fiber (122a) of said downstream repair cable piece (122a, 122b) is connected to the first optical fiber (114a), and said fourth optical fiber (122a) of said downstream repair cable piece (122a, 122b) is connected to the second optical fiber (114b).

14. A cable piece according to claim 8, wherein
said third optical fiber (121a) is positioned upstream of optical signal transmission, and
said fourth optical fiber (121b) is positioned downstream of optical signal transmission.

15. A cable piece according to claim 8, wherein said third and fourth optical fibers comprise dispersion management fibers.

16. A cable piece according to claim 8, wherein
said additional cable has a length of about 2.5 times a maximum depth of water, and
said additional cable is inserted and connected in an optical cable cut section of the optical cable laid at a depth of water not more than the maximum depth of water regardless of a depth of water.
